# EUROPEAN PATENT APPLICATION

(11) **EP 1 107 583 A2**
(43) Date of publication of application: **13.06.2001**
(21) Application number: 00119778.9
(22) Date of filing: 11.09.2000
(51) Int. Cl.: H04N 5/232

(54) **Information processing apparatus**

(30) Priority: 01.12.1999 JP 34235999
(71) Applicant: KABUSHIKI KAISHA TOSHIBA, Kawasaki-shi (JP)
(72) Inventor: Nakamura, Masaru, 1-1 Shibaura 1-chome Minato-ku Tokyo 105 (JP)
(74) Representative: Henkel, Feiler, Hänzel

(57) **Abstract**

An information processing apparatus can perform a screen control such that an image acquired by a camera is made easily visible, irrespective of a remaining power of a battery. The information processing apparatus is driven by power supplied from the battery (36). The information processing apparatus has an LCD (18) with a backlight (26). If a start-up instruction is input by an operation of a shutter switch (32), a CPU (10) activates the camera (16) and initiates a camera operation mode. When the camera (16) is activated, the CPU (10) instructs a backlight drive circuit (24) to lower the luminance level of the backlight (26), thereby preventing a voltage value of the battery (36) from lowering due to occurrence of a large current flowing in a camera circuit section.

## Description

The present invention relates to an information processing apparatus such as a small-sized portable terminal.

In recent years, information processing apparatuses have been developed, which are provided with cameras and are capable of acquiring a color image, storing it as a file, or sending it along with an e-mail. In particular, if this type of information processing apparatus is constructed as a battery-powered portable device, the information processing apparatus provided with the camera can be carried to a desired place and a color image can be acquired there.

In this type of battery-driven information processing apparatus with the camera, the value of a current flowing in the camera circuit section increases abruptly when the camera is activated. Consequently, the voltage value of the battery decreases. When the remaining power of the battery is small, the normal operation of the information processing apparatus cannot be ensured due to the decrease in voltage value.

A color image acquired by the camera has a lower contrast than a computer-graphics (CG) image. Thus, the color image acquired by the camera becomes easier to view, if it is displayed on a backlight-equipped display device with a backlight luminance increased. However, if the backlight luminance is increased, the power consumption increases. In the case of a battery-powered information processing apparatus, lower power consumption is required in order to increase a time period in which stable operations are ensured. In addition, a luminance control for a backlight which consumes relatively high power is also required. In particular, in the case of a small-sized information processing apparatus, the problem of power consumption is serious since it cannot be equipped with a high-capacity battery.

Moreover, where a tablet for coordinates data input is integrally stacked on the color image display device of the information processing apparatus, a displayed color image becomes less easy to view due to the presence of the tablet. If the backlight luminance of the color display device is increased to make the color image easier to view, the power consumption increases.

An object of the present invention is to provide a battery-driven information processing apparatus having a camera, wherein a normal operation of the information processing apparatus is ensured when the camera is activated, even if the remaining power of the battery is small.

Another object of the invention is to provide an information processing apparatus wherein a screen control can be performed to make an image acquired by a camera easier to view, without affecting the remaining power of a battery.

Still another object of the invention is to provide an information processing apparatus capable of displaying coordinates data input through a tablet on a color image display device, without a need to increase the luminance of a backlight of the color image display device.

According to an aspect of the present invention, there is provided a battery-driven information processing apparatus. The apparatus comprises: a camera activated by a start-up instruction to acquire an image; display means for displaying an image acquired by the camera; backlight means for emitting a backlight to the display means, the backlight having various luminance levels; drive means for altering the luminance level of the backlight; and screen control means for causing the drive means to lower the luminance level at a start-up time for activating the camera.

When the camera is activated, a large current flows in the camera circuit section. Consequently, the voltage of the battery lowers. If the remaining power of the battery is inadequate, a normal operation may not be ensured. With the above structure, the luminance level of the backlight is temporarily decreased when the camera is activated. Thereby, a voltage drop of the battery is prevented and the stable operation is ensured. The display mode of the display device is changed to the camera image display mode when the camera is activated. Since the luminance of the backlight is controlled at this time, the user has no unnatural feeling.

It is preferable that the luminance level to be lowered may be a minimum luminance level of predetermined luminance levels for turning on the backlight means.

If the luminance level of the backlight is reduced to 0% (i.e. the backlight is turned off), the power consumption can be most reduced. In this case, however, a large current may suddenly flow when the luminance level is restored to the initial level, as in the case of activating the camera. It is preferable, therefore, that the luminance level of the backlight is set at a minimum level for turning on the backlight, when the camera is activated.

After the start-up time has passed since the luminance level was lowered, the screen control means may restore the luminance level to the level before the lowering.

According to still another aspect of the invention, there is provided an information processing apparatus The apparatus comprises: a camera for acquiring a color image; a color image display device for displaying color images including the color image acquired by the camera; a monochromatic image display device for displaying a monochromatic image; a tablet for coordinates data input, the tablet being integrally stacked on a display screen of the monochromatic image display device; and input pattern display means for overlapping an input pattern corresponding to the coordinates data input through the tablet with the color image displayed on the color image display device.

With this structure, the tablet is not integrally stacked on the color image display device. Thus, the display transmittance of the color image display device is not decreased. Therefore, the display screen can be made easier to view, without increasing the contrast of the image.

It is preferable that the information processing apparatus further comprises contour pattern display means for extracting a contour pattern of the image displayed on the color image display device, and displaying the contour pattern on the monochromatic image display device.

According to this structure, when the input pattern corresponding to the coordinates data input through the tablet is to be overlapped with the color image acquired by the camera, the contour pattern of the image displayed on the color image display device is displayed on the monochromatic image display apparatus. Therefore, the desired input pattern can be overlapped with the color image by the input of coordinates data corresponding to the contour pattern.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a system structure of an information processing apparatus according to a first embodiment of the present invention;
FIG. 2 shows an external structure of the information processing apparatus according to the first embodiment;
FIGS. 3A and 3B are views for explaining backlight luminance data 122 and contrast control data 123;
FIG. 4 is a flow chart illustrating a backlight luminance control;
FIGS. 5A and 5B are views for explaining a variation in current value in a camera circuit section and a variation in a current for driving the backlight when the camera 16 is activated;
FIG. 6 is a view for explaining a state in which the luminance of the backlight 26 is varied stepwise;
FIG. 7 is a flow chart illustrating a contrast control for an image displayed in the LCD 18;
FIGS. 8A and 8B show examples of a screen of a camera image and a screen of a graphic image displayed on the LCD 18;
FIG. 9 is a block diagram showing a system structure of an information processing apparatus according to a second embodiment of the present invention;
FIG. 10 is a flow chart illustrating a two-screen display control; and
FIGS. 11A to 11D show examples of a screen of a camera image displayed on a color LCD 182, a screen of a contour pattern displayed on a monochromatic LCD 181, a screen of a contour pattern and a hand-written input pattern displayed on the monochromatic LCD 181, and a screen of an overlapping image of a camera image and a handwritten input pattern on the color LCD 182.

Embodiments of the present invention will now be described with reference to the accompanying drawings.

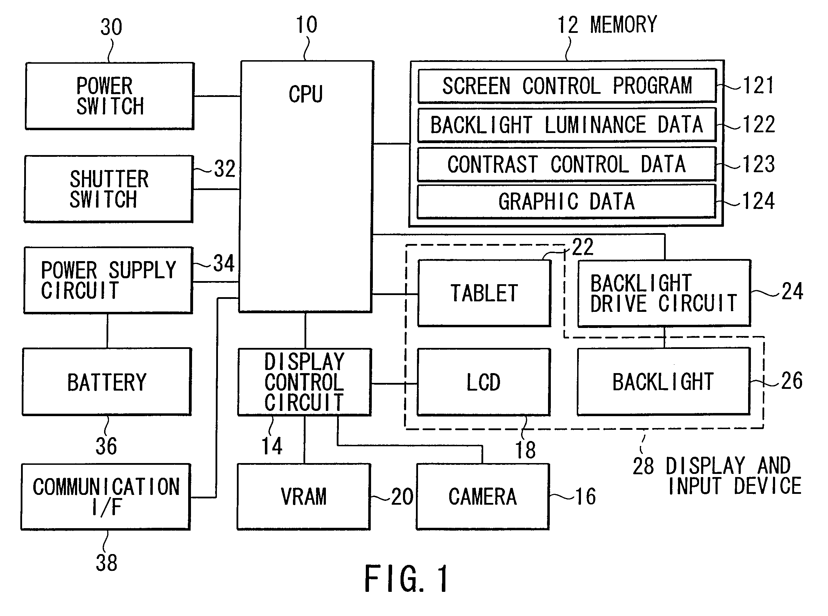

FIG. 1 is a block diagram showing a system structure of an information processing apparatus according to a first embodiment of the invention. The functions of the information processing apparatus of this embodiment is realized by a computer. The computer reads in a program recorded on a recording medium, and the operation of the computer is controlled by this program. In addition, the information processing apparatus of the first embodiment is a small-sized portable terminal driven by a battery. When this information processing apparatus is connected to a radio communication apparatus such as a mobile phone or a personal handyphone system (PHS), information such as an image acquired at a given location may be sent out to some other radio communication apparatus. In addition, an image from some other radio communication apparatus may be received by the information processing apparatus.

As is shown in FIG. 1, the information processing apparatus of the first embodiment comprises a CPU 10, a memory 12, a display control circuit 14, a camera 16, an LCD (liquid crystal display) 18, a VRAM 20, a tablet 22, a backlight drive circuit 24, a backlight 26, a power switch 30, a shutter switch 32, a power supply circuit 34, a battery 36, and a communication interface (I/F) 38.

The CPU 10 controls the entirety of the apparatus, and it executes programs stored in the memory 12, thereby to realize various functions. Specifically, the CPU 10 executes a screen control program 121 stored in the memory 12, thereby to perform a screen control including a luminance control for the backlight 26.

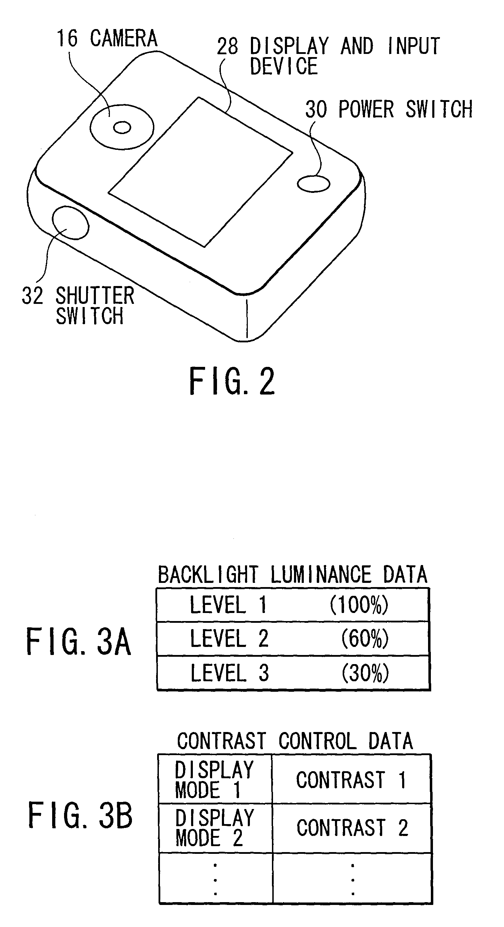

The memory 12 stores programs to be executed by the CPU 10 and various data. The memory 12 stores, for instance, the aforementioned screen control program 121, backlight luminance data 122 used for screen control, and contrast control data 123. The backlight luminance data 122 is data for enabling the backlight drive circuit 24 to control the luminance of the backlight 26. The contrast control data 123 is data for enabling the display control circuit 14 to control a contrast of an image displayed on the LCD 18. The details will be described later with reference to FIGS. 3A and 3B. In addition, graphic data 124 utilized by various application programs (not shown) and using high-chroma, high-brightness colors such as primary colors is prepared in the memory 12.

The display control circuit 14 performs, under control of the CPU 10, a control for displaying an image on the LCD 18 and a control for acquiring an image from the camera 16. The display control circuit 14 writes image data to be displayed on the LCD 18 into the VRAM 20, and effects, for example, color display on the LCD 18 in accordance with the image data. In a camera operation mode in which a color image is acquired from the camera 16, the color image acquired by the camera 16 is displayed on the LCD 18. The display control circuit 14 has a function of altering a contrast of a color image displayed on the LCD 18, in accordance with an instruction issued by the CPU 10.

The camera 16 is activated by an activation instruction from the CPU 10 and then acquires the color image. In the camera operation mode in which the camera 16 is activated, the color image acquired by the camera 16 is displayed on the LCD 18.

The LCD 18 performs image display under control of the display control circuit 14 and, for example, it performs display of a color image. The LCD 18 can alter the contrast of the image under control of the display control circuit 14.

The VRAM 20 stores image data of an image to be displayed on the LCD 18.

A tablet 22 is used for inputting coordinates data in order to input an operation instruction or an image pattern to the apparatus. For example, a pressure-sensitive type tablet is used. The tablet 22 is formed to be transparent so as to pass light. The tablet 22 is stacked on the display screen of the LCD 18 as one body. Accordingly, while viewing the display content (various objects such as menus) displayed on the LCD 18, coordinates data corresponding to a location of display content can be directly input.

The backlight drive circuit 24 functions to drive the backlight 26 to emit light. The backlight drive circuit 24 can vary the luminance level of the backlight 26 in accordance with an instruction on the luminance level from the CPU 10.

The backlight 26 is a light source provided on a back side of the LCD 18, and it is driven by the backlight drive circuit 24. The LCD 18 and tablet 22 which are integrally stacked on one another, and backlight 26 constitute a display and input device 28.

The power switch 30 is a switch for instructing activation/halt of the apparatus. The shutter switch 32 is a switch for instructing a shift to a camera operation mode for activating the camera, or instructing acquisition of a still image in the camera operation mode.

The power supply circuit 34 supplies power from the battery 36 to the respective structural components of the apparatus and monitors the state of the battery 36 (e.g. the remaining power of the battery). The battery 36 supplies power to activate the apparatus.

The communication interface 38 is an interface for connection with a radio communication apparatus such as a mobile phone or a PHS. The communication interface 38 is used to wirelessly send out various information such as images acquired by the camera 16.

FIG. 2 shows an external structure of the information processing apparatus according to the first embodiment of the invention.

As is shown in FIG. 2, the information processing apparatus of the first embodiment is formed to have a small, portable size so that the casing thereof may be placed, for example, on the palm. The camera 16 is disposed near one end portion of an upper surface of the casing. The display and input device 28 (LCD 18, tablet 22 and backlight 26) is disposed near a central portion of the upper surface of the casing. The power switch 30 is provided near another end portion opposed to the camera 16. In addition, the shutter switch 32 is disposed on a side surface of the casing at such a position as to facilitate the operation by the forefinger when the apparatus is held by the right hand with its lower surface put on the palm and the camera 16 facing upward.

The backlight luminance data 122 and contrast control data 123 stored in advance in the memory 112 will now be described.

As is shown in FIG. 3A, adjustable luminance levels (LEVEL 1, LEVEL 2, LEVEL 3) which can be chosen by the backlight drive circuit 24 are registered in the backlight luminance data 122. In the example shown in FIG. 3A, level 1 indicates 100%, or a highest luminance. Level 2 indicates 60%, and level 3 indicates 30%. The contrast control data 123 indicates contrast values of images displayed on the LCD 18 which can be controlled by the display control circuit 14. The contrast values (contrast 1, contrast 2, ···) are predetermined in association with the luminance levels of the backlight 26 such that images may be easily viewed. Since the luminance level of the backlight 26 is changed according to the display mode, contrast 1, contrast 2, ···, are associated with display mode 1, display mode 2, ···, on the LCD 18 in the example of FIG. 3B. The display modes include an activation mode of the camera 16, a camera display mode for displaying an image acquired by the camera 16, and a graphic display mode for displaying an image based on the graphic data 124 prepared in advance.

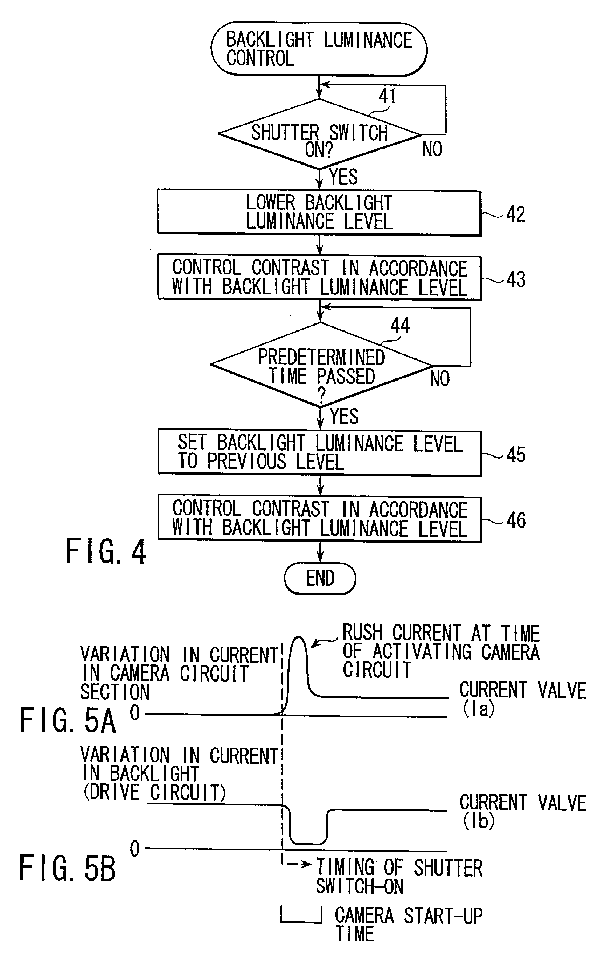

The operation of the first embodiment will now be described with reference to flow charts. To begin with, a backlight luminance control will be described with reference to a flow chart of FIG. 4.

If the shutter switch 32 is depressed to instruct activation of the camera 16 (a shift to the camera operation mode) (step 41), the CPU 10 instructs activation of the camera 16. When the camera 16 is activated, circuits of the camera functional sections begin to operate and a large current flows.

FIG. 5A shows a variation in the value of current flowing in the camera 16 at the time of activation of the camera 16. As is shown in FIG. 5A, a current value (Ia) suddenly increases at the timing of turn-on of the shutter switch 32, and consequently the voltage value of the battery 36 decreases. Accordingly, when the remaining power of the battery 36 is small, the normal operation of the apparatus may not be ensured due to a decrease in the voltage value.

The CPU 10 instructs the backlight drive circuit 24 to lower the luminance level of the backlight 26 at the timing of the turn-on of the shutter switch 32 (at the timing of the activation of the camera 16) (step 42). For example, where the luminance level of the backlight 26 is level 1 (100%), the CPU 10 instructs the backlight drive circuit 24 to drive the backlight 26 at level 3 (30%) prepared in the backlight luminance data 122. Upon receiving the instruction from the CPU 10, the backlight drive circuit 24 sets the luminance of the backlight 26 at level 3 (30%). Thereby, as shown in FIG. 5B, the current value (Ib) required for driving the backlight decreases. Thus, the degree of the decrease in the voltage value of the battery 36 due to the activation of the camera 16 can be reduced. The lowering of the luminance level of the backlight 26 is effective since the power required for driving the backlight 26 is relatively great, compared to the power consumed in the respective sections of the apparatus. If the luminance level of the backlight 26 is reduced to 0% (i.e. the backlight 26 is turned off), the power consumption can be most reduced. In this case, however, a large current may suddenly flow when the luminance level is restored to the initial level, as in the case of activating the camera 16. In this embodiment, therefore, the luminance level of the backlight 26 is not reduced to 0%.

On the other hand, the CPU1 10 instructs the display control circuit 14 such that the contrast of the screen displayed on the LCD 18 may be controlled in accordance with the decreased in luminance level of the backlight 26 (step 43). For example, optimal contrast values (contrast 1, contrast 2, ···) for easy viewing of images at the time the backlight 26 is driven with the luminance of respective levels (FIG. 3A) registered as the backlight luminance data 122 are registered as the contrast control data 123 in the memory 12. The optimal contrast value for easy viewing of images varies depending on the performance of the LCD 18, backlight 26, camera 16, etc. mounted in the apparatus.

Thus, the optical contrast values may be determined in advance by experiments using the actual apparatus. The contrast value corresponding to the luminance level of the backlight 26 is told to the display control circuit 14 from the CPU 10. On the basis of this contrast value, the display control circuit 14 controls the contrast of the screen on the LCD 18. For example, by varying the value of the voltage applied to the electrodes at the time of driving the LCD 18, the display control circuit 14 adjusts the contrast of the screen on the LCD 18. Normally, the screen as a whole darkens when the luminance of the backlight 26 is lowered. Thus, if the contrast is decreased, the display content on the screen becomes easier to view.

After decreasing the luminance of the backlight 26 and controlling the contrast of the LCD 18 according to the luminance of the backlight 26, the CPU 10 waits for a time period needed for completion of the start-up operation of the camera 16 (step 44). For example, in FIG. 5A, a time period needed until the current value of the camera 16 reaches a stable state is set as a predetermined time period (camera start-up time period).

If the predetermined time period has passed, the CPU 10 assumes that the start-up operation for the camera 16 is completed and instructs the backlight drive circuit 24 to set the luminance of the backlight 26 at a level equal to the level before the start-up of the camera 16 (step 45). In addition, the CPU 10 instructs the display control circuit 14 to control the contrast of the screen on the LCD 18 in accordance with the luminance level of the backlight 26 (step 46).

In this way, when a large current suddenly flows in the camera circuit section upon the activation of the camera 16, the luminance of the backlight 26 is decreased to reduce the power consumption. Thus, the decrease in voltage of the battery 36 is prevented, and occurrence of an unstable operation of the apparatus is avoided. Furthermore, at the time of activation of the camera 16, the luminance of the backlight 26 is controlled in accordance with the switching of the screen on the LCD 18, and no unnatural feeling is caused to the user. When the start-up time period for activating the camera 16 is about 0.5 second, for instance, the above-described process is carried out at the time of switching of the screen and the process is instantaneously finished, while the user is unaware of it.

In the above description, where the luminance level of the backlight 26 is level 1 (100%), it is lowered to level 3 (30%) at the time of activating the camera 16. However, the luminance level may be lowered to level 2 (60%). Where the luminance level of the backlight 26 is level 2 (60%), it may be lowered to level 3 (30%) at the time of activating the camera 16. Although the three luminance levels are provided for the backlight 26, more luminance levels may be set.

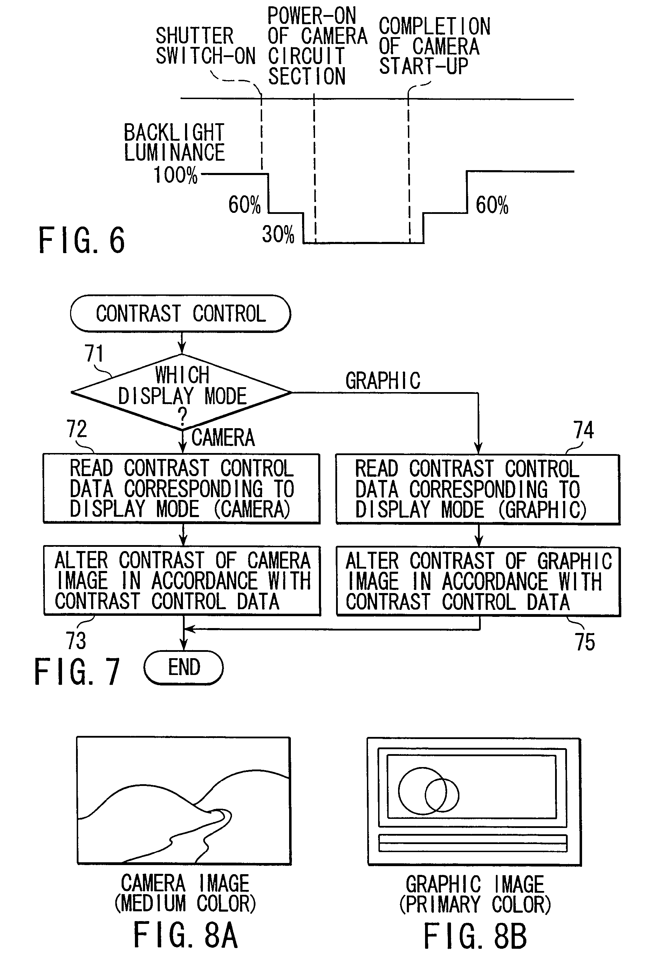

Besides, as shown in FIG. 6, the luminance of the backlight 26 may be varied stepwise so that the user may be hardly aware of the variation in luminance and may not have an unnatural feeling. For example, if the shutter switch 32 is turned on when the luminance of the backlight 26 is at level 1 (100%), the CPU 10 lowers the luminance of the backlight 26 by one level, i.e. to level 2 (60%), at this timing. Specifically, the backlight 26 is activated with the luminance of level 2 (60%). Then, the luminance of the backlight 26 is lowered by one level in a time period from when the shutter switch 32 is turned on to when power is supplied to the circuit section of the camera 16. Specifically, the backlight 26 is activated with the luminance of level 3 (30%). After a sufficient time for completion of the start-up operation of the camera 16 has passed, the luminance of the backlight 26 is increased by one level, i.e. to level 2 (60%). Then, following the passing of a predetermined time period, the luminance of the backlight 26 is increased by one level, i.e. to level 1 (100%). In this manner, the luminance of the backlight 26 can be varied stepwise so that the user may be hardly aware of the variation in luminance and may not have an unnatural feeling.

In addition, the contrast of the screen on the LCD 18 is controlled in accordance with the variation in luminance of the backlight 26 upon the activation of the camera 16. Even in a case where the luminance of the backlight 26 is varied for some other reason, the contrast may also be controlled in accordance with the varied luminance. For example, a function may be provided for switching the luminance of the backlight 26 between a "light" mode and a "dark (power-saving)" mode according to an instruction of the user. If the backlight 26 activated at luminance level 1 (100%) in the "light" mode is controlled to be activated at luminance level 2 (60%) in the "dark" mode, the CPU 10 causes the display control circuit 14 to control the contrast of the image on the LCD 18 in accordance with the luminance (level 2) of the backlight 26. In this manner, in cases other than the start-up of the camera 16, the contrast of the screen on the LCD 18 is similarly controlled according to the luminance of the backlight 26. Thereby, even if the luminance of the backlight 26 is lowered, the screen displayed on the LCD 18 can be made easier to view.

With reference to a flow chart of FIG. 7, a description will now be given of a contrast adjustment for an image displayed on the LCD 18.

In the above-described backlight luminance control, the contrast adjustment is effected in accordance with the decrease in luminance of the backlight 26 upon the start-up of the camera 16. In this example, the contrast adjustment is effected according to the display modes of the LCD 18. In this context, the display modes include a camera display mode for displaying an image acquired by the camera 16 and a graphic display mode for displaying an image based on the graphic data 124 prepared in advance with execution of some application program.

If the display mode of the LCD 18 is changed to the camera display mode due to the shift to the camera operation mode (step 71), the CPU 10 reads out contrast value data corresponding to the camera display mode from the contrast control data 123 registered in the memory 12 (step 72).

The CPU 10 instructs the display control circuit 14 to effect screen display based on the contrast value read out from the contrast control data 123 (step 73). In accordance with the contrast value told from the CPU 10, the display control circuit 14 alters the contrast of the screen on the LCD 18 and causes the LCD 18 to display the image acquired by the camera 16 with the contrast suitable for the camera display mode.

For example, a camera image acquired by the camera 16 is an image of a landscape, as shown in FIG. 8A, or an image of a person. The feature of such images is the presence of medium colors on a most part of the image, with a neutral-level (not high) chroma and brightness. Accordingly, in the camera display mode in which the camera image is displayed on the LCD 18, the contrast is increased to make the camera image easier to view.

On the other hand, if the display mode of the LCD 18 is changed to the graphic display mode with execution of some application program (step 71), the CPU 10 reads out contrast value data corresponding to the graphic display mode from the contrast control data 123 registered in the memory 12 (step 74).

The CPU 10 instructs the display control circuit 14 to effect screen display based on the contrast value read out from the contrast control data 123 (step 75). In accordance with the contrast value told from the CPU 10, the display control circuit 14 alters the contrast of the screen on the LCD 18 and causes the LCD 18 to display a graphic image based on the graphic data 124 in the memory 12, with the contrast suitable for the graphic display mode.

An image based on the graphic data 124, for instance, is formed by an image forming program, as shown in FIG. 8B. In many cases, colors of the image are predetermined by the program, and accordingly the image is characterized by the use of high-chroma, high-brightness colors such as primary colors. In the graphic display mode in which the image based on the graphic data 124 prepared in advance is displayed on the LCD 18, the contrast may be decreased to make the display content on the screen easier to view.

In the above description, only the camera display mode and graphic display mode are mentioned. In the cases of other display modes, too, the contrast control data 123 for the respective display modes may be prepared and the contrast adjusted according to the display content.

A second embodiment of the present invention will now be described.

An information processing apparatus according to the second embodiment is constructed to be capable of executing an application for, for example, overlapping a handwritten pattern input through a tablet with a color image acquired by the camera 16.

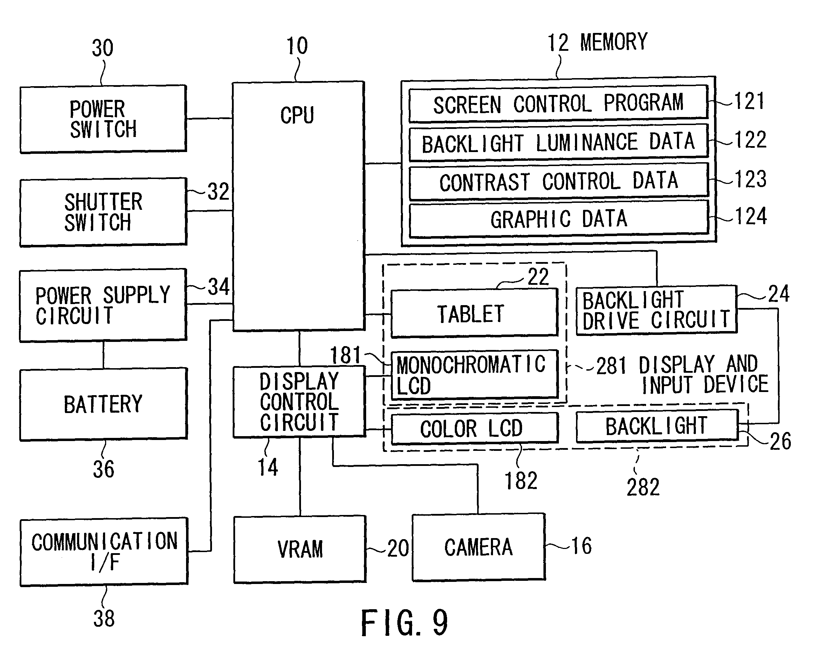

FIG. 9 is a block diagram showing a system structure of the information processing apparatus according to the second embodiment. This information processing apparatus includes a monochromatic LCD 181 as a monochromatic image display device and a color LCD 182 as a color image display device. The display control circuit 14 effects screen display on both the monochromatic LCD 181 and the color LCD 182. The monochromatic LCD 181 and the color LCD 182 may be arranged on the information processing apparatus in a vertical direction, or in a horizontal direction, or in any other arrangement form. The screen sizes of the monochromatic LCD 181 and the color LCD 182 may be equal or different.

The tablet 22 is integrally stacked on the display screen of the monochromatic LCD 181. While viewing the display content on the monochromatic LCD 181, for instance, various objects such as menus or a contour pattern (to be described later), coordinates data corresponding to a location of the display content can be directly input. The monochromatic LCD 181 and tablet 22 constitute a display and input device 281.

The backlight 26 is mounted on a back face of the color LCD 182, and it is driven by the backlight drive circuit 24. The color LCD 182 and the backlight 26 constitute a display device 282.

In the information processing apparatus according to the second embodiment, the color LCD 182 is not provided with the tablet and thus a decrease in display transmittance is prevented. Normally, when a color image acquired by the camera 16 is to be displayed, the color image on the screen becomes easier to view if the luminance of the backlight 26 is increased. However, since the tablet is not provided on the color LCD 182, there is no need to increase the luminance of the backlight 26 in consideration of a decrease in display transmittance. In the second embodiment, a handwritten pattern can be directly input through the tablet 22 so that it may overlap the image displayed on the color LCD 182.

The structure of the information processing apparatus according to the second embodiment differs from that of the information processing apparatus according to the first embodiment only with respect to the provision of the display and input device 281 and display device 282, as shown in FIG. 9. Accordingly, a detailed description of the structure of the second embodiment may be omitted.

The operation of the second embodiment will now be described.

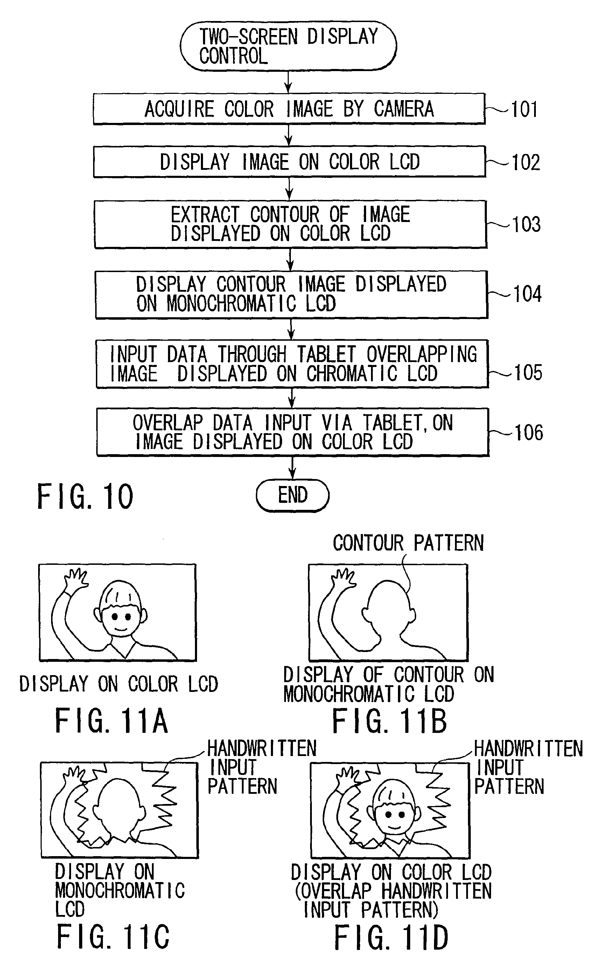

To begin with, a two-screen display control will be described with reference to a flow chart of FIG. 10. Specifically, an application is executed to overlap a handwritten pattern input through the tablet 22 with a color image acquired by the camera 16.

If a shift to the camera operation mode is designated by the operation of the shutter switch 32 or by the choice from the menu presented on the color LCD 182, the CPU 10 activates the camera 16. If the camera 16 is activated, a color image acquired by the camera 16 is displayed on the color LCD 182 under control of the display control circuit 14.

If the shutter switch 32 is operated in the camera operation mode, the CPU 10 acquires a still image (step 101) and displays it on the color LCD 182 (step 102). FIG. 11A shows an example of the acquired color image displayed on the color LCD 182.

The CPU 10 subjects the displayed color image on the color LCD 182 to a contour extraction process, and extracts a contour pattern of the display content on the color LCD 182 (step 103). Any method may be used for the contour extraction process.

If the CPU 10 extracts the contour pattern of the image displayed on the color LCD 182, the CPU 10 displays it on the monochromatic LCD 181 (step 104). The contour pattern displayed on the monochromatic LCD 181 can be visually recognized through the tablet 22.

FIG. 11B shows an example of the contour pattern extracted from the image shown in FIG. 11A and displayed on the monochromatic LCD 181.

Since the contour pattern is displayed on the monochromatic LCD 181, a handwritten pattern can be input through the table 22 so as to overlap the displayed contour pattern (step 105). Specifically, some pattern is input using a pen, etc. on the display input surface of the display and input device 281. In accordance with an input coordinates data sequence corresponding to the handwritten input pattern, the CPU 10 displays the handwritten input pattern on the screen of the monochromatic LCD 181. FIG. 11C shows an example of the handwritten input pattern overlapping the contour pattern displayed on the monochromatic LCD 181.

Although the tablet 22 is provided on the monochromatic LCD 181 alone, the image displayed on the color LCD 182 can be understood from the contour pattern. Accordingly, a handwritten pattern can be input to overlap the contour pattern in the same manner as the case of directly inputting a handwritten pattern to overlap the color image displayed on the color LCD 182.

In accordance with a coordinates data sequence corresponding to the handwritten pattern input through the tablet 22, the CPU 10 displays the handwritten input pattern overlapping the color image on the color LCD 182 (step 106). FIG. 11D shows an example of a screen image obtained by overlapping the handwritten pattern input through the tablet 22 with the color image on the color LCD 182.

Even if the color LCD 182 is not provided with the tablet, the handwritten pattern can be input to overlap the color image on the color LCD 182, using the display and input device 281 (monochromatic LCD 181, tablet 22). It is thus unnecessary to consider a decrease in display transmittance due to the provision of the tablet on the color LCD 182. Therefore, even if the luminance of the backlight 26 is not increased to compensate a decrease in display transmittance, the screen image on the color LCD 182 can be made easily visible. In addition, since there is no need to increase the luminance of the backlight 26, compared to the case where the tablet is provided on the color LCD 182, power consumption can be reduced. Furthermore, since the tablet 22 is provided on the monochromatic LCD 181 alone, the number of parts can be decreased and the manufacturing cost also decreased.

In the above description, both the monochromatic LCD 181 and color LCD 182 are used at the same time. However, there is a case where only one of them is mainly used, depending on the application program to be executed. For example, in the case of an e-mail, a text data is mainly displayed. Accordingly, the monochromatic LCD 181 is mainly used by the user. Where a process requiring mainly a screen display on the monochromatic LCD 181 is performed, the CPU 10 instructs the backlight drive circuit 24 to lower the luminance of the backlight 26. Thereby, the power consumption can be reduced. In accordance with an application to be used or the operational content of the application, it is predetermined whether the monochromatic LCD 181 is to be mainly used, or the color LCD 182 is to be mainly used, or neither. The predetermined data thus obtained is stored in the memory 12, for instance.

As already described in connection with the first embodiment, if the luminance level of the backlight 26 is reduced to 0% (i.e. the backlight 26 is turned off), the power consumption can be most reduced. In this case, however, a large current may suddenly flow when the luminance level is restored to the initial level, as in the case of activating the camera 16. In this embodiment, therefore, the luminance level of the backlight 26 is not reduced to 0%.

Where the luminance of the backlight 26 has been lowered by the backlight drive circuit 24, the contrast of the image displayed on the color LCD 182 may be altered in accordance with the luminance of the backlight 26.

In some cases, even when the monochromatic LCD 181 is mainly used, the user may wish to confirm the display content on the color LCD 182. Although the display screen on the color LCD 182 becomes less easily visible owing to the decrease in luminance of the backlight 26, the contrast of the display screen on the color LCD 182 is adjusted in accordance with the luminance level of the backlight 26, like the first embodiment. Specifically, when the luminance level of the backlight 26 is decreased, the CPU 10 informs the display control circuit 14 of the contrast values registered in the contrast control data 123 in accordance with the luminance levels of the backlight 26. Thus, the CPU 10 instructs the display control circuit 14 to decrease the contrast of the screen image displayed on the color LCD 182.

In this way, even if the luminance of the backlight 26 is lowered due to the main use of the monochromatic LCD 181, the contrast of the screen displayed on the color LCD 182 is adjusted in accordance with the luminance level of the backlight 26. Therefore, the screen on the color LCD 182 can also be made easily visible.

The processes according to the above-described embodiments may be recorded, as computer-executable programs, on a recording medium such as a magnetic disk (floppy disk, hard disk, etc.), an optical disk (CD-ROM, DVD, etc.), or a semiconductor memory, and the recording medium may be provided to various apparatuses. In addition, the programs may be provided to various apparatuses by transmission through a communication medium. The computer realizing the functions of the present apparatus reads the programs recorded on the recording medium, or receives the programs via the communication medium. The operation of the program is controlled by the programs and thus the processes are executed.

## Claims

1. A battery-driven information processing apparatus, the apparatus characterized by comprising:
a camera (16) activated by a start-up instruction to acquire an image;
display (18) means for displaying an image acquired by the camera (16);
backlight means (26) for emitting a backlight to the display means (18), the backlight having various luminance levels;
drive means (10, 24) for altering the luminance level of the backlight; and
screen control means (10, 121) for causing the drive means (10, 24) to lower the luminance level at a start-up time for activating the camera (16).

2. An apparatus according to claim 1,
characterized in that the luminance level to be lowered is a minimum luminance level of predetermined luminance levels for turning on the backlight means (26).

3. An apparatus according to claim 1,
characterized in that after the start-up time has passed since the luminance level was lowered, the screen control means (10, 12) restores the luminance level to the level before the lowering.

4. An apparatus according to claim 1,
characterized by further comprising display control means (10, 14) for decreasing a contrast of an image displayed on the display device in accordance with the luminance level, when the luminance level is lowered by the drive means.

5. An apparatus according to claim 4,
characterized in that after the start-up time has passed, the display control means (10, 14) restores the contrast of the image to a level before the contrast is decreased.

6. An apparatus according to claim 1,
characterized in that the screen control means (10, 121) lowers the luminance level from a first luminance level to a second luminance level when a shutter switch (32) of the camera (16) is turned on, and lowers the luminance level from the second luminance level to a third luminance level after the shutter switch (32) is turned on and before the camera (16) is activated.

7. An information processing apparatus characterized by comprising:
a camera (16) for acquiring a color image;
a color image display device (182) for displaying color images including the color image acquired by the camera;
a monochromatic image display device (181) for displaying a monochromatic image;
a tablet (22) for coordinates data input, the tablet (22) being integrally stacked on a display screen of the monochromatic image display device (181); and
input pattern display means (10) for overlapping an input pattern corresponding to the coordinates data input through the tablet (22) with the color image displayed on the color image display device (182).

8. An apparatus according to claim 7,
characterized by further comprising contour pattern display means (10) for extracting a contour pattern of the image displayed on the color image display device (182), and displaying the contour pattern on the monochromatic image display device (181).
